# EUROPEAN PATENT SPECIFICATION

(11) **EP 1 999 299 B1**
(45) Date of publication and mention of the grant of the patent: **30.04.2014**
(21) Application number: 07730545.6
(22) Date of filing: 28.03.2007
(51) Int. Cl.: C23F 14/00, C25F 1/02, C01F 7/06, C23F 13/00

(54) **ELECTRO-CHEMICAL METHOD IN AN ENRICHMENT PROCESS**
ELEKTROCHEMISCHES VERFAHREN IN EINEM ANREICHERUNGSPROZESS
PROCEDE ELECTROCHIMIQUE DANS UN PROCESSUS D'ENRICHISSEMENT

(30) Priority: 29.03.2006 FI 20060299
(43) Date of publication of application: 10.12.2008
(73) Proprietor: Savcor Art Global OY, 50100 Mikkeli (FI)
(72) Inventor: LAURILA, Timo, FI-15680 Lahti (FI)
(74) Representative: Espatent Oy
(86) International application number: PCT/FI2007/000076
(87) International publication number: WO 2007/110469

(56) References cited:
- FI-A- 793 694
- US-A- 4 345 981
- US-A- 4 689 127
- US-A1- 2004 011 744
- US-A1- 2004 031 697

## Description

The present invention relates to a method as defined in the preamble of claim 1.

Certain ore enrichment processes comprise dissolution of solid matter under high temperature and pressure conditions and a subsequent crystallization stage, from which the desired pure concentrate is obtained. For example, in the Bayer process generally used in the production of aluminum oxide, the ore is dissolved in a hot alkaline solution under high pressure. A problem with these processes is fast formation of deposition on the surfaces of process equipment. Deposition is typically formed on the interior walls of dissolution reactors, concentrators and crystallizers because they are at a temperature lower than in the rest of the process: The solution close to the cooler surface becomes over-saturated with respect to a solids particle and the formation of deposition begins.

In the Bayer process, the hard deposition formed on the surfaces mostly contains gibsite and various silicate compounds and is very difficult to remove. Due to the formation of deposition, pipes and valves get blocked, the efficiency of heat exchangers is reduced and the volume of tanks and containers and consequently the production capacity are reduced. For example, the volume of a crystallizer may be reduced by as much as one third, which in a crystallization process based on dwell time increases the delivery cycle time in a corresponding proportion, reducing the production quantities.

Periodic cleaning shutdowns are required, and therefore a stand-by reserve of process equipment is needed; some of the equipment is always excluded from production due to cleaning. Thus, the highest costs result from production losses during shutdowns. Coatings more easily cleanable have been developed for process equipment. In addition, to restrain the formation of deposition, large quantities of different chemicals for preventing deposition are supplied into the process. Electro-chemical deposition inhibiting methods have also been proposed; for example, patent CA2495957 describes an application of cathodic polarization.

The object of the present invention is to achieve an improvement in currently known deposition preventing methods used in mining industry. A more particular object of the invention is to create a method that will make it possible to alter the structure of especially the deposition formed in a Bayer process so as to prevent or considerably reduce its adherence to the surface of process equipment. A further object of the invention is to create a method that will retard the formation of deposition so that the length of the period between cleaning shutdowns can be substantially increased. In addition, the objects of the invention have to be achieved using an electro-chemical treatment that will not impair the corrosion resistance of the structural material of the process equipment to be protected against deposition.

The objects of the invention are accomplished by a method according to claim 1.

The method of the invention is based on the insight of using the effects resulting from the electro-chemical reactions taking place on and near the surface to alter the structure of the deposition so as to weaken its adherence to the surface.

In a preferred embodiment of the invention, the surface of a process device in a process susceptible to deposition is polarized in the anodic direction by using an external power source and a current supply electrode placed in the solution so that the electro-chemical reaction products thus produced alter the structure of the deposition present or accumulating on the surface in such a way that the adherence of the deposition to the surface is substantially weakened. The change in the potential of the metal surface in the anodic direction caused by the anodic polarization is adapted to be such that the metal surface of the process device will not suffer corrosion damage due to the raised potential. The highest anodic potentials that can be used are determined by commonly known corrosion analysis methods and they depend on the properties of the electrolyte, the properties of the metal and the reference electrode used. Therefore, real-time measurement of the electro-chemical potential of the process device to be protected against deposition is important in respect of risk-free application of the method.

In the method of the invention, the current/voltage supplied by the power source is controlled on the basis of an external measurement signal and/or an internal measurement signal. Alternatively, the current/voltage can be controlled on the basis of a control signal obtained from a data file.

In a preferred embodiment of the method of the invention, the current/voltage produced by the power source is controlled by means of a timed control signal so that the current/voltage is changed at desired time intervals t₁, t₂, ..., tₙ to a pre-desired magnitude.

In a second preferred embodiment of the invention, the surface of a process device in a process susceptible to deposition is polarized in the anodic direction by using an external power source and a current supply electrode placed in the solution so that the potential of the surface of the process device is brought to a range where the electro-chemical reactions provoked prevent the formation of deposition or substantially retard it. In this case, too, the potential has to be in a range where the structural material of the process device will not undergo corrosion damage.

In the method of the invention, it is possible to use pulsed anodic direct current or a combination of an alternating-current component and an anodic direct-current component to produce the desired electro-chemical reactions.

In the system of the invention, the surface of the process device to be protected need not be treated or coated with any special coating or a different kind of metal. The system of the invention is operated by supplying anodic current through the oxide layer that is spontaneously created in alkaline conditions on the surface of the commonest structural material, carbon steel, used in process equipment. The oxide layer is an important factor contributing to the corrosion resistance of carbon steel, so eliminating it e.g. from a cathode by using polarization is hazardous.

Possible places where the system of the invention can be used include the inner walls, overflow chutes and process pipes of a process device, such as a precipitator, clarifier, crystallizer or reactor, in a process susceptible to deposition. Clogging of valves can also be obviated by the system of the invention. The current supply electrodes are mounted inside the process device so that they are in contact with the electrolyte and galvanically isolated from the process device to be protected.

Reference electrodes monitoring the intensity of anodic polarization are mounted near the surface to be protected so that they are in contact with the electrolyte and galvanically isolated from the process device to be protected. The material of the reference electrodes can be selected from metals that can withstand the conditions prevailing in the process and retain their characteristic potential at a level sufficiently constant with respect to reliability of the potential measurement. The choice of the reference electrode material does not affect the working principle of the system of the invention.

The method of the invention can be applied directly by installing in existing structures a system functioning according to the invention. If necessary, new structures can also be developed to allow application of the method of the invention.

In the following, the invention will be described in detail by referring to a few preferred embodiments presented in the figures in the attached drawings, but the invention is not exclusively limited to those embodiments.
Fig. 1 represents a preferred embodiment of the method of the invention in diagrammatic side view.
Fig. 2 represents a second preferred embodiment of the method of the invention in diagrammatic cross-sectional side view.
Fig. 3 illustrates an advantage achieved by using the method of the invention in obviating deposition in a Bayer process.
Fig. 4 presents a flow diagram representing the regulating function of a preferred embodiment of the method of the invention.
Fig. 5 presents a flow diagram representing the regulating function of a second preferred embodiment of the method of the invention.

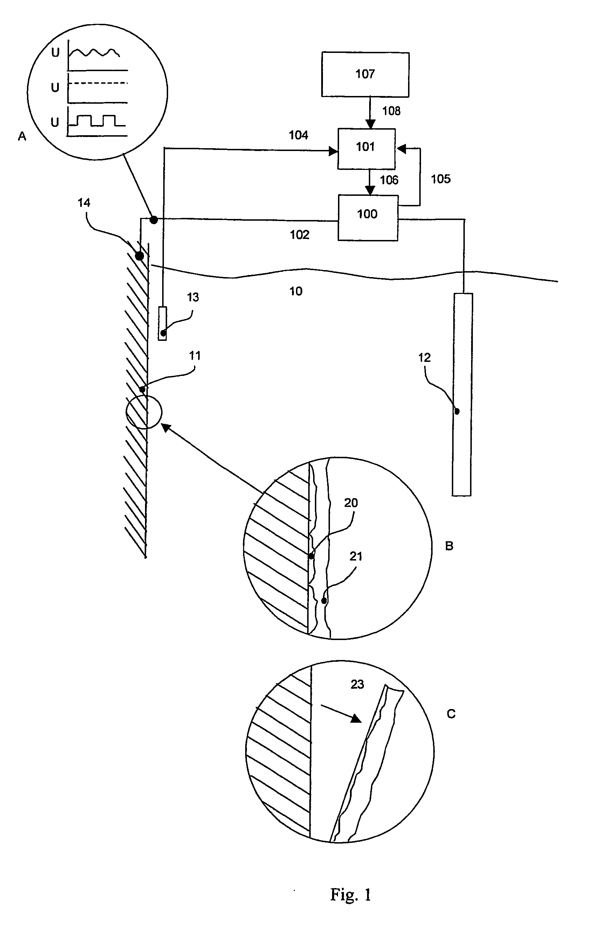

In Fig. 1, a process solution exposing equipment to the formation of deposition is indicated by reference number 10. In this embodiment, the process device's metallic inner wall to be protected against deposition and functioning as one of the electrodes in an electric circuit is indicated by reference number 11, a current supply electrode by reference number 12, a reference electrode by reference number 13 and a galvanic anode current supply contact by reference number 14. In magnified detail B, the deposition layer in the immediate vicinity of the surface 11 is indicated by reference number 20 and an outer deposition layer by reference number 21.

In the embodiment according to Fig. 1, a power source 100 is fitted to supply the electrode pair 11, 12 either with direct current modified by an AC component, direct current or pulsed direct current, as visualized in magnified detail A. In this embodiment, the current supply electrode 12 functions as a cathode while the inner wall 11 of metallic structure of the process device to be protected functions as an anode. The current supplied by the power source 100 is conducted via the cathode 12 through the process solution 10 serving as an electrolyte to the anode 11 to be protected against deposition and further via the galvanic contact 14 back to the power source 100. Placed near the object 11 to be protected against deposition is also a sensor, in this embodiment e.g. the reference electrode 13. The sensor 13 may be any detector that can provide the measuring and control unit 101 with information regarding the current state of the process susceptible to deposition. The measuring and control unit 101 controls the operation of the power source 100 via a control signal 106 so that a current of a desired magnitude flows between the electrode pair 11, 12, so that the oxidation reactions occurring on the surface of the object 11 to be protected are of a quantity and quality such that the reaction products formed as a result of the chemical reactions on the surface 11 and in its immediate vicinity inhibit the formation of deposition or substantially reduce the adherence of deposition to the object 11 to be protected. Functionally, this appears e.g. as a process whereby the deposition layer 20 closest to the surface 11 is softened sufficiently to weaken its adhesion to the surface 11 and the weight of the outer deposition layer 21 causes the deposition layers to come off the wall, as illustrated in magnified detail C.

In the embodiment illustrated in Fig. 1, the current/voltage produced by the power source 100 is controlled by means of an external measurement signal 104 or an internal measurement signal 105. The current/voltage produced by the power source 100 can naturally also be controlled by means of an external measurement signal 104 and an internal measurement signal 105.

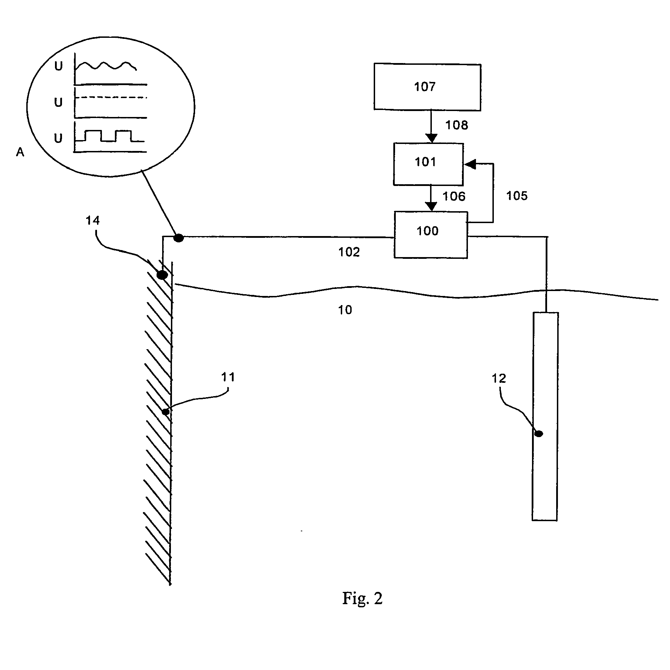

In the embodiment illustrated in Fig. 2, the intensity of the current supplied by the power source 100 can also be controlled by only using a data file 107. The data received into the data file 107 includes e.g. information regarding a property of the process section preceding or following the process section susceptible to deposition that has been found to bear a correlation to the velocity of the formation of deposition or to the quality of the deposition. Information may also be supplied to the data file 107 from laboratory analyses. Such information includes e.g. the pH, solids content, temperature, concentration of a deposition component, viscosity, etc. The data file 107 also contains information regarding earlier current/voltage values produced by the power source 100 that have been found to be advantageous in respect of workability of the invention. From the data file 107, a control signal 108 is applied to the measuring and control unit 101.

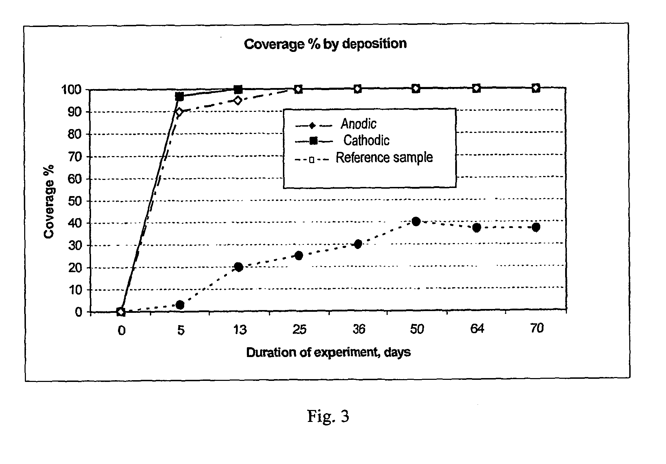

Fig. 3 presents a measurement result empirically obtained by applying a preferred embodiment of the method of the invention in a Bayer process. The duration of the experiment is represented as a number of days on the x-axis, while the y-axis represents the test sample area covered by deposition as a percentage of the total area of the test sample. Both the cathodically treated test sample and an untreated reference sample were completely covered by a deposition layer within 13...25 days from the beginning of the experiment. Of the surface area of the anodically treated test sample, about one third was covered by deposition after a month from the beginning of the experiment, but after that the situation stabilized as the deposition began to detach spontaneously from the surface. The current densities with the test samples were about 0.5 - 20 A/m², a pulsed direct current being used.

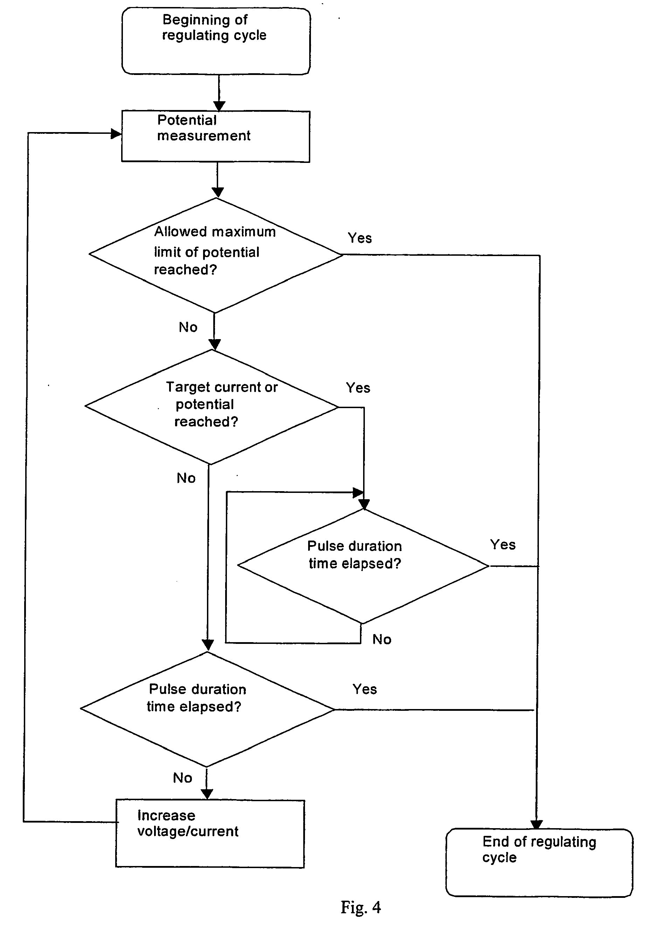

Fig. 4 presents a flow diagram representing the regulating cycle performed by the control unit 101 to control the supply of current. When a sensor 13 measuring the electro-chemical potential of the surface 11 is in use, the first step in the regulating cycle is measurement of the potential, whereupon it is possible to check whether the maximum potential which is of essential importance regarding the risk of corrosion has already been reached. Information regarding this corrosion risk potential may be pre-supplied, or it may be a value based on earlier measurements, or the sensor 13 may be provided with a system that together with the control unit 101 is able to perform on-line measurements for determining the corrosion risk potential. If it is established that the measured potential has already reached the allowed maximum limit, then the regulating cycle is terminated without further action. If the allowed maximum limit of the potential has not yet been reached, then the next step is to check whether a target current or target potential defined in the regulating parameters has already been reached. If the target current or target potential has already been reached, then the regulating cycle is kept waiting until the end of the pulse duration, whereupon it is terminated. If the target current or target potential has not yet been reached, then the current or voltage supplied by the power source 100 is increased by a step of desired magnitude and the new potential is measured, whereupon the above-described checks are repeated. After the end of the regulating cycle, a new regulating cycle is started upon the lapse of a desired length of time.

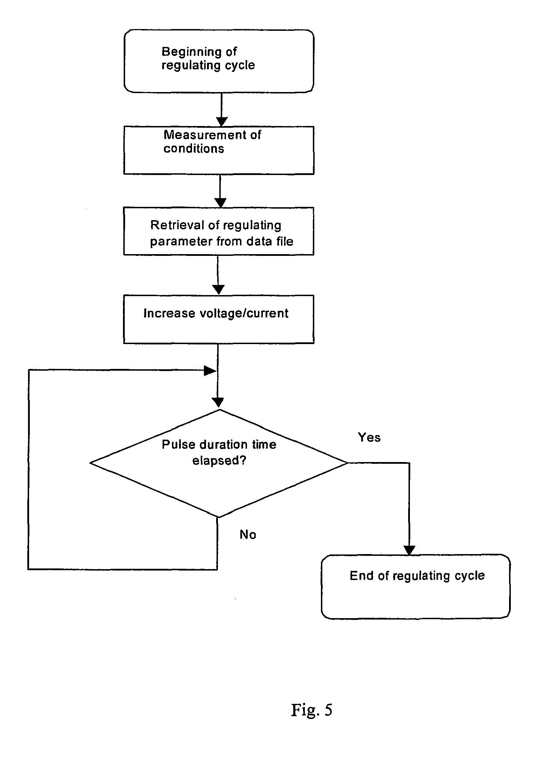

Fig. 5 presents a flow diagram representing the regulating cycle performed by the control unit 101 to control the supply of current when the control signal 106 received by the power source 100 can be calculated on the basis of the information contained in the data file 107. At the beginning of the regulating cycle, in case this information concerns on-line conditions, a measurement of the values to be fed into the data file 107 is performed. Next, a calculated regulating parameter applicable to the situation is obtained from the data file 107 and the voltage or current supplied by the power source 100 is increased as desired. After this, the regulating cycle is kept waiting until the end of the pulse duration and then terminated. After the termination of the regulating cycle, a new regulating cycle is started upon the lapse of a desired length of time.

In the foregoing, only a few preferred embodiments of the invention have been described. It is obvious to a person skilled in the art that numerous modifications may be made in them within the scope of the inventive concept presented in the claims.

## Claims

1. Method in bauxite enrichment process taking place in water solutions, in which process undesirable depositions (20) are formed in process containers, piping and equipment and in which the surface (11) of an object to be protected in a process susceptible to deposition is polarized in the anodic direction by using an external power source (100) and a current supply electrode (12) placed in the solution, **characterized in that** using pulsed anodic direct current the potential of the surface (11) of the object to be protected is brought to a range in which the electro-chemical reaction products thus produced alter the structure of the deposition (20) present on the surface (11) of the object (11) to be protected or accumulating on said surface (11) in such a way that the adherence of said deposition (20) to said surface (11) is substantially weakened.

2. Method according to claim 1, **characterized in that** the potential of the surface (11) of the object to be protected is brought to a range in which the electro-chemical reaction products formed inhibit the formation of deposition or substantially retard the formation of deposition on said surface (11).

3. Method according to claim 1 or 2, **characterized in that** the change in the potential of the said surface (11) of the said object to be protected resulting from the aforesaid anodic polarization is caused to be such that the said surface (11) does not undergo any substantial corrosion damage due to the raised potential.

4. Method according to any one of claims 1 - 3, **characterized in that** a combination of an alternating-current component and an anodic direct-current component is used in the method to accomplish the desired electro-chemical reactions.

5. Method according to any one of claims 1 - 4, **characterized in that** a current density value in the range of 0.5 - 20 A/m² is chosen.

6. Method according to any one of claims 1 - 5, **characterized in that** the current/voltage supplied by the said power source (100) is controlled on the basis of an external measurement signal (104) and/or an internal measurement signal (105).

7. Method according to any one of claims 1-5, **characterized in that** the current/voltage supplied by the said power source (100) is controlled on the basis of a control signal (108) obtained from a data file (107).

8. Method according to any one of claims 1 - 5, **characterized in that** the current/voltage produced by the said power source (100) is controlled by means of a timed control signal by changing the current/voltage at desired time intervals t₁, t₂, ..., tₙ to a pre-desired magnitude.

9. Method according to any one of claims 1 - 8, **characterized in that** the said surface (11) of the said object to be protected is selected from the group of: precipitators, clarifiers, crystallizers or inner walls of a reactor, heat exchangers, overflow chutes, process pipes and valves used in a process.

10. Method according to any one of claims 1 - 9, **characterized in that** reference electrodes (13) monitoring the intensity of the anodic polarization are mounted near the surface (11) to be protected so that they are in contact with the electrolyte and galvanically isolated from the objects to be protected.

11. Method according to claim 10, **characterized in that** the material of the aforesaid reference electrode (13) is selected from metals that withstand the conditions prevailing in the process and retain their characteristic potential at a level sufficiently constant in respect of reliability of the potential measurement.

## Patentansprüche

1. Verfahren in einem Bauxit-Anreicherungsprozess, der in wässrigen Lösungen stattfindet,
wobei in dem Prozess unerwünschte Ablagerungen (20) in Prozessbehältern, in Rohrleitungen und in Ausrüstungen gebildet werden, und
wobei die Oberfläche (11) eines Gegenstandes, der in einem Prozess geschützt werden soll, der für Ablagerungen anfällig ist, unter Verwendung einer externen Stromquelle (100) und einer Stromzuführungs-Elektrode (12), die in der Lösung platziert ist, in anodischer Richtung polarisiert wird,
**dadurch gekennzeichnet, dass**
durch die Verwendung eines gepulsten anodischen Gleichstroms das Potenzial der Oberfläche (11) des zu schützenden Gegenstandes in einen Bereich gebracht wird, in dem die elektro-chemischen Reaktionsprodukte, die dadurch erzeugt werden, die Struktur der Ablagerung (20), die auf der Oberfläche (11) des zu schützenden Gegenstandes (11) vorliegt, verändern oder sich auf der Oberfläche (11) in solch einer Weise ansammeln, dass die Anhaftung der Ablagerung (20) an der Oberfläche (11) wesentlich herabgesetzt wird.

2. Verfahren gemäß Anspruch 1, **dadurch gekennzeichnet, dass** das Potenzial der Oberfläche (11) des zu schützenden Gegenstandes in einen Bereich gebracht wird, in dem die gebildeten elektro-chemischen Reaktionsprodukte die Bildung von Ablagerungen verhindern oder die Bildung von Ablagerungen auf der Oberfläche (11) wesentlich verlangsamen.

3. Verfahren gemäß Anspruch 1 oder 2, **dadurch gekennzeichnet, dass** die Veränderung des Potenzials der Oberfläche (11) des besagten zu schützenden Gegenstandes, die sich aus der vorgenannten anodischen Polarisierung ergibt, so verursacht wird, dass die Oberfläche (11) keine wesentlichen Korrosionsschäden aufgrund des erhöhten Potenzials erfährt.

4. Verfahren gemäß einem der Ansprüche 1 bis 3, **dadurch gekennzeichnet, dass** eine Kombination einer Wechselstromkomponente und einer anodischen Gleichstromkomponente in dem Verfahren verwendet wird, um die gewünschten elektro-chemischen Reaktionen zu erreichen.

5. Verfahren gemäß einem der Ansprüche 1 bis 4, **dadurch gekennzeichnet, dass** ein Stromdichtewert im Bereich von 0,5 - 20 A/m² gewählt wird.

6. Verfahren gemäß einem der Ansprüche 1 bis 5, **dadurch gekennzeichnet, dass** der Strom/die Spannung, der/die von der Stromquelle (100) zugeführt wird auf der Grundlage eines externen Messsignals (104) und/oder eines internen Messsignals (105) gesteuert wird.

7. Verfahren gemäß einem der Ansprüche 1 bis 5, **dadurch gekennzeichnet, dass** der Strom/die Spannung, der/die von der Stromquelle (100) zugeführt wird, auf der Grundlage eines Steuersignals (108) gesteuert wird, das von einer Datenbank (107) erhalten wird.

8. Verfahren gemäß einem der Ansprüche 1 bis 5, **dadurch gekennzeichnet, dass** der Strom/die Spannung, der/die von der Stromquelle (100) erzeugt wird, mittels eines zeitgesteuerten Steuersignals durch Verändern des Stroms/der Spannung in gewünschten Zeitintervallen t₁, t₂, ... tₙ, auf eine vorgewünschte Größe gesteuert wird.

9. Verfahren gemäß einem der Ansprüche 1 bis 8, **dadurch gekennzeichnet, dass** die Oberfläche (11) des zu schützenden Gegenstandes ausgewählt ist aus der Gruppe von: Abscheidern, Klärbecken, Kristallisatoren, oder Innenwänden eines Reaktors, Wärmetauscher, Abfluss- bzw. Überlauf-Rinnen bzw. -Rohren, Prozess-Leitungen und Ventilen, die in einem Prozess verwendet werden.

10. Verfahren gemäß einem der Ansprüche 1 bis 9, **dadurch gekennzeichnet, dass** Referenzelektroden (13), die die Intensität der anodischen Polarisierung überwachen, nahe der zu schützenden Oberfläche (11) angebracht sind, sodass sie mit dem Elektrolyten in Kontakt stehen und galvanisch von den zu schützenden Gegenständen getrennt sind.

11. Verfahren gemäß Anspruch 10, **dadurch gekennzeichnet, dass** das Material der besagten Referenzelektrode (13), ausgewählt ist aus Metallen, die den Bedingungen widerstehen können, die in dem Prozess vorherrschen, und ihr charakteristisches Potenzial auf einem Niveau beibehalten, das in Bezug auf die Zuverlässigkeit der Potenzialmessung hinreichend konstant ist.

## Revendications

1. Procédé dans un processus d'enrichissement de la bauxite qui a lieu dans des solutions aqueuses, processus dans lequel des dépôts indésirables (20) sont formés dans des conteneurs, de la tuyauterie et de l'équipement du processus, et dans lequel la surface (11) d'un objet destiné à être protégé dans un processus susceptible de dépôt est polarisée dans la direction anodique en utilisant une source d'énergie externe (100) et une électrode d'alimentation en courant (12) placée dans la solution, **caractérisé en ce qu'**en utilisant du courant continu anodique pulsé le potentiel de la surface (11) de l'objet destiné à être protégé est porté à une plage dans laquelle les produits de la réaction électro-chimique ainsi produits modifient la structure du dépôt (20) présent sur la surface (11) de l'objet (11) destiné à être protégé ou qui s'accumule sur ladite surface (11) de telle manière que l'adhérence dudit dépôt (20) à ladite surface (11) est sensiblement affaiblie.

2. Procédé selon la revendication 1, **caractérisé en ce que** le potentiel de la surface (11) de l'objet destiné à être protégé est porté à une plage dans laquelle les produits de la réaction électro-chimiques formés inhibent la formation de dépôt ou retardent substantiellement la formation de dépôt sur ladite surface (11).

3. Procédé selon la revendication 1 ou 2, **caractérisé en ce que** le changement dans le potentiel de ladite surface (11) dudit objet destiné à être protégé résultant de la polarisation anodique précitée est amené à être tel que ladite surface (11) ne subit aucun dommage de corrosion substantiel en raison du potentiel relevé.

4. Procédé selon l'une quelconque des revendications 1 à 3, **caractérisé en ce qu'**une combinaison d'une composante de courant alternatif et d'une composante de courant continu anodique est utilisée dans le procédé pour réaliser les réactions électro-chimiques désirées.

5. Procédé selon l'une quelconque des revendications 1 à 4, **caractérisé en ce qu'**une valeur de densité de courant dans une plage allant de 0,5 à 20 A/m² est choisie.

6. Procédé selon l'une quelconque des revendications 1 à 5, **caractérisé en ce que** le courant / la tension fourni(e) par ladite source d'énergie (100) est commandé(e) sur la base d'un signal de mesure externe (104) et / ou d'un signal de mesure interne (105).

7. Procédé selon l'une quelconque des revendications 1 à 5, **caractérisé en ce que** le courant / la tension fourni(e) par ladite source d'énergie (100) est commandé(e) sur la base d'un signal de commande (108) obtenu à partir d'un fichier de données (107).

8. Procédé selon l'une quelconque des revendications 1 à 5, **caractérisé en ce que** le courant / la tension produit(e) par ladite source d'énergie (100) est commandé(e) au moyen d'un signal de commande temporisé en changeant le courant / la tension à des intervalles de temps désirés t₁, t₂,..., tₙ à une amplitude pré-souhaitée.

9. Procédé selon l'une quelconque des revendications 1 à 8, **caractérisé en ce que** ladite surface (11) dudit objet destiné à être protégé est choisie parmi le groupe constitué : des cuves de précipitation, des cuves de clarification, des cristallisoirs ou des parois internes d'un réacteur, des échangeurs de chaleur, des goulottes de débordement, des tuyauteries du processus et des vannes utilisées dans un processus.

10. Procédé selon l'une quelconque des revendications 1 à 9, **caractérisé en ce que** les électrodes de référence (13) surveillant l'intensité de la polarisation anodique sont montées à proximité de la surface (11) destinée à être protégée, de sorte qu'elles sont en contact avec l'électrolyte et isolées galvaniquement des objets destinés à être protégés.

11. Procédé selon la revendication 10, **caractérisé en ce que** le matériau de l'électrode de référence précitée (13) est choisi parmi les métaux qui résistent à des conditions qui prévalent dans le processus et conservent leur potentiel caractéristique à un niveau suffisamment constant en ce qui concerne la fiabilité de la mesure de potentiel.
